Europäisches Patentamt

(19) European Patent Office

Office européen des brevets

(11) **EP 0 765 709 B1**

## (12) FASCICULE DE BREVET EUROPEEN

(45) Date de publication et mention
de la délivrance du brevet:
**07.01.1999 Bulletin 1999/01**

(51) Int. Cl.⁶: **B23K 9/02**

(21) Numéro de dépôt: **96401999.6**

(22) Date de dépôt: **19.09.1996**

(54) **Procédé de réglage de paramètres de soudage pour la réalisation d'un joint de soudure entre deux pièces métalliques**

Verfahren zum Regeln von Schweissparametern zum Schweissen von zwei metallischen Werkstücken

Brass for controlling the welding parameters in order to weld two metallic workpieces

(84) Etats contractants désignés:
**AT BE DE DK ES FI GB GR IT PT SE**

(30) Priorité: **28.09.1995 FR 9511409**

(43) Date de publication de la demande:
**02.04.1997 Bulletin 1997/14**

(73) Titulaires:
- **FRAMATOME**
**92400 Courbevoie (FR)**
- **Institut de la Soudure**
**93420 Villepinte (FR)**

(72) Inventeurs:
- **Huguet, Régis**
**71380 Epervans (FR)**
- **Boivin, Didier**
**71380 Epervans (FR)**
- **Hazza, Abdulhafid**
**93100 Montreuil (FR)**

(74) Mandataire: **Bouget, Lucien et al**
**Cabinet Lavoix**
**2, Place d'Estienne d'Orves**
**75441 Paris Cédex 09 (FR)**

(56) Documents cités:
- **WELDING INTERNATIONAL, vol. 6, no. 1, 1992, CAMBRIDGE (GB), pages 26-31, XP000247443 HIRAMOTO AND AL.: "Development of a multipass welding program for arc welding robots and its application to heavy electrical components"**
- **PATENT ABSTRACTS OF JAPAN vol. 10, no. 257 (M-513) [2313] , 3 Septembre 1986 & JP-A-61 082980 (NIPPON KOKAN K.K.), 26 Avril 1986,**
- **PATENT ABSTRACTS OF JAPAN vol. 12, no. 311 (M-734) [3158] , 24 Août 1988 & JP-A-63 084776 (YASKAWA ELECTRIC MFG CO LTD), 15 Avril 1988,**
- **PATENT ABSTRACTS OF JAPAN vol. 9, no. 256 (M-421) [1979] , 15 Octobre 1985 & JP-A-60 106672 (DAIKIN KOGYO K.K.), 12 Juin 1985,**

## Description

L'invention concerne un procédé de réglage de paramètres de soudage pour la réalisation d'un joint de soudure entre deux pièces métalliques.

On connaît des procédés de soudage de deux pièces métalliques et en particulier de pièces métalliques de grandes dimensions, consistant à remplir un chanfrein ménagé entre les deux pièces et délimité par une première surface usinée sur une première des deux pièces et une seconde surface en vis-à-vis usinée sur la seconde des deux pièces à joindre par soudure. Ce procédé peut être utilisé en particulier pour souder bout à bout des pièces annulaires telles que des viroles chaudronnées de grandes dimensions ou des tuyauteries.

Pour réaliser un tel soudage de deux pièces de grandes dimensions, on place les pièces dans leur disposition de raccordement, de manière que les parties à raccorder des pièces délimitent un chanfrein de soudage, puis on effectue le remplissage du chanfrein par un métal d'apport, par fusion d'un élément en métal d'apport généralement sous la forme d'un fil et dépôt du métal fondu à l'intérieur du chanfrein. Le soudage peut être effectué par un procédé sous gaz inerte TIG dans lequel un fil en métal d'apport est fondu dans un arc électrique produit entre une électrode de tungstène et les pièces à souder ou encore par un procédé tel que le MIG/MAG dans lequel le fil en métal d'apport constitue l'électrode alimentée en courant électrique et produisant l'arc dans lequel est fondu le métal d'apport.

Le chanfrein qui présente généralement une section transversale constante s'étend dans une direction longitudinale entre les pièces à joindre. Par exemple, dans le cas de deux viroles dont on assure le soudage bout à bout, la direction longitudinale du chanfrein correspond à la direction circonférentielle des pièces dont deux extrémités de forme annulaire sont disposées en vis-à-vis. La forme de la section transversale du chanfrein est définie par la forme des parties d'extrémité des pièces placées en vis-à-vis et qui sont usinées suivant un profil bien défini. Le chanfrein s'étend transversalement, dans une direction perpendiculaire à la direction longitudinale, entre la partie d'extrémité de la première pièce et la partie d'extrémité de la seconde pièce qui doivent être jointes par soudure l'une avec l'autre. Cette direction transversale correspond à la direction des génératrices des viroles dans le cas du soudage bout à bout de deux viroles. La section transversale du chanfrein s'étend également dans une direction perpendiculaire à la fois à la direction longitudinale et à la direction transversale, cette troisième direction correspondant à la hauteur ou profondeur du chanfrein qui doit être rempli par du métal d'apport. Dans le cas de la jonction bout à bout de deux viroles, cette troisième direction correspond à une direction radiale des deux viroles.

Le remplissage du chanfrein est réalisé par passes successives au cours de chacune desquelles on dépose un cordon de soudure à l'intérieur du chanfrein.

Pour réaliser une passe de soudage, on réalise un déplacement relatif entre une tête de soudage, telle qu'une tête de soudage MIG/MAG, et les pièces à joindre. Pour obtenir le déplacement relatif entre les pièces et la tête de soudage, il est possible, soit de déplacer la tête de soudage par rapport aux pièces, soit encore de maintenir la tête de soudage fixe et de déplacer les pièces en vis-à-vis de la tête de soudage. Par exemple, dans le cas du soudage bout à bout de deux viroles, il est possible de mettre les deux viroles placées en position de soudage, en rotation autour de leur axe commun et de réaliser le dépôt de métal d'apport avec une tête de soudage maintenue en position fixe et dirigée vers l'intérieur du chanfrein.

Du fait que le chanfrein peut présenter un volume important par rapport au volume de métal d'un cordon de soudure déposé au cours d'une passe, il peut être nécessaire de réaliser de très nombreuses passes successives à l'intérieur du chanfrein.

Généralement, les cordons de soudure sont juxtaposés dans la direction transversale du chanfrein, de manière à constituer des couches successives qui sont empilées l'une sur l'autre suivant la profondeur ou la hauteur du chanfrein.

Dans le cas de constructions chaudronnées de grandes dimensions et en particulier dans le cas de composants nécessitant une qualité parfaite de fabrication, il est nécessaire d'automatiser le plus possible le procédé de soudage pour obtenir des conditions stables et reproductibles du dépôt de métal d'apport, au cours de chacune des passes de soudage successives.

En particulier, dans le cas de la construction des cuves de réacteur nucléaire par soudage bout à bout de viroles de grandes dimensions (d'un diamètre de l'ordre de quatre à cinq mètres), il est nécessaire de maîtriser parfaitement les conditions du soudage au cours de chacune des passes nécessaires pour réaliser une couche de métal déposé et pour la réalisation des couches successives empilées l'une sur l'autre.

En outre, la section transversale du chanfrein présente généralement, dans le sens de l'épaisseur des pièces, des bords inclinés, de sorte que la largeur des couches, dans la direction transversale, n'est pas constante. Les couches empilées l'une sur l'autre ne présentent donc pas toutes un même nombre de cordons de soudure réalisés chacun au cours d'une passe de soudage. D'autre part, les couches successives doivent être d'épaisseur constante pour assurer un remplissage régulier et satisfaisant du chanfrein.

Il est donc nécessaire de régler certains des paramètres de soudage en fonction des caractéristiques de la couche à réaliser par passes successives et en particulier en fonction de la largeur de la couche dans la direction transversale.

L'article "Development of a multipass welding program for arc welding robots ans its application to heavy electrical components", paru dans Welding International vol. 6, no.1, 1992, décrit déjà un procédé permettant d'effectuer le réglage de paramètres de soudage pour la réalisation des passes de chacune des couches de métal de remplissage d'un chanfrein. Selon ce procédé connu, la première couche est réalisée en une passe, la deuxième en deux passes, la troisième en trois passes et ainsi de suite. Les couches déposées après la première ont une épaisseur constante. La largeur des couches est calculée de sorte à obtenir un joint ayant une largeur désirée.

Le but de l'invention est donc de proposer un procédé de réglage de paramètres de soudage pour la réalisation d'un joint de soudure entre une première et une seconde pièces métalliques, par remplissage d'un chanfrein qui s'étend suivant une première direction longitudinale des pièces et dans une seconde direction, transversale, entre un premier et un second bords usinés respectivement sur la première et la seconde pièces, par des cordons de soudure réalisés chacun au cours d'une passe de soudage par déplacement relatif d'une tête de soudage à une vitesse d'avance définie, par rapport aux pièces, dans la direction longitudinale et juxtaposés dans la direction transversale entre les deux pièces, pour constituer des couches d'épaisseur constante qui sont empilées l'une sur l'autre dans une troisième direction perpendiculaire aux deux premières, suivant la hauteur du chanfrein, ce procédé permettant de réaliser des couches successives d'épaisseur parfaitement constante, par juxtaposition de cordons de soudure de caractéristiques parfaitement définies.

Dans ce but, pour chacune des couches de remplissage du chanfrein :

- on détermine une largeur de base de la couche correspondant à la dimension dans la direction transversale d'une surface sur laquelle on dépose la couche, entre le premier et le second bords du chanfrein,
- on détermine le nombre de passes nécessaires pour réaliser la couche à partir d'une valeur initiale de la largeur des cordons de soudure,
- on détermine une largeur restante réelle de la couche en soustrayant de la largeur de base une valeur fixe prédéterminée correspondant à la largeur optimale d'un cordon de soudure en contact avec le second bord de la couche qui doit être déposé au cours d'une passe finale de réalisation de la couche,
- on détermine une valeur initiale de la largeur restante à partir de valeurs initiales des largeurs des cordons de soudure et du nombre de passes,
- on calcule un rapport R entre la largeur restante réelle et la valeur initiale de la largeur restante, et
- on détermine à partir d'une valeur initiale de la vitesse d'avance et du rapport R, la vitesse d'avance dans la direction longitudinale de la tête de soudage au cours de chacune des passes successives pour la réalisation de la couche, la vitesse d'avance de la tête de soudage au cours de la passe finale, dans la direction longitudinale, et, à partir d'une valeur initiale du décalage et du rapport R, un décalage de la tête de soudage dans la direction transversale du chanfrein entre deux passes successives.

Afin de bien faire comprendre l'invention, on va maintenant décrire, à titre d'exemple non limitatif, en se référant aux figures jointes en annexe, la mise en oeuvre du procédé suivant l'invention dans le cas d'une soudure en corniche de deux pièces épaisses par le procédé MIG/MAG.

La figure 1 est une vue en coupe par un plan vertical de parties d'extrémité de deux pièces à joindre par soudure entre lesquelles est ménagé un chanfrein de soudage.
Les figures 2A et 2B sont des vues en coupe analogues à la vue de la figure 1 montrant deux modes de remplissage du chanfrein par des couches successives de soudure.
La figure 3 est une vue en coupe d'une couche de métal d'apport à l'intérieur d'un chanfrein de soudage, constituée par des cordons de soudure juxtaposés.
Les figures 4A, 4B, 4C et 4D sont des vues schématiques montrant la position d'une tête de soudage MIG/MAG pendant la réalisation de passes successives d'une couche de métal d'apport à l'intérieur d'un chanfrein de soudage.
La figure 5 est une vue en coupe du chanfrein de soudage pendant le remplissage par des couches successives de métal d'apport.
La figure 6 est une vue en coupe du chanfrein de soudure rempli par les couches successives de métal d'apport constituées chacune par des cordons de soudure juxtaposés.

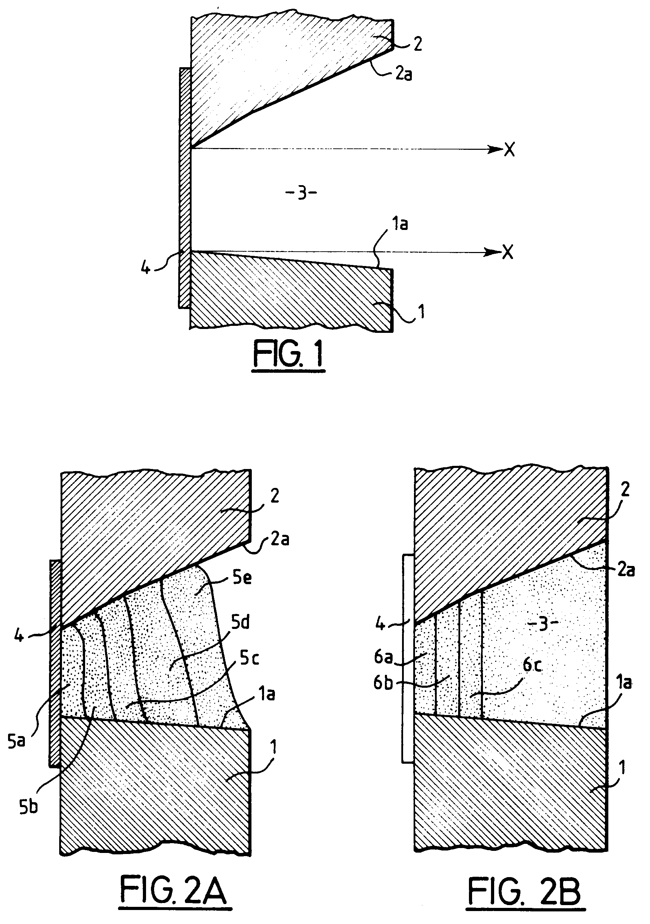

Sur la figure 1, on voit une partie d'une première pièce métallique 1 de forte épaisseur et une partie d'une seconde pièce métallique 2 de forte épaisseur, les pièces 1 et 2 comportant des surfaces d'extrémité usinées sous la forme de surfaces 1a et 2a qui sont placées en vis-à-vis de manière à délimiter entre elles un chanfrein de soudage 3 dont la section transversale, visible sur la figure 1, présente une forme sensiblement trapézoïdale.

Les pièces 1 et 2 peuvent être par exemple des pièces annulaires placées dans une disposition coaxiale et de manière que leurs surfaces d'extrémité 1a et 2a se trouvent en vis-à-vis avec un certain écartement, de manière à délimiter un chanfrein 3 de forme annulaire dont la section sensiblement en forme de trapèze est visible sur la figure 1.

De manière à fermer le chanfrein du côté intérieur des pièces 1 et 2, on dispose contre la surface intérieure des pièces, un anneau de fermeture 4 contre lequel sera déposée la première couche de métal d'apport de soudure, dans le fond du chanfrein 3.

Le soudage bout à bout des pièces 1 et 2 par remplissage du chanfrein 3 par du métal d'apport est réalisé "en corniche", la pièce 2 étant disposée au-dessus de la pièce 1 avec un certain écartement et les couches successives de remplissage du chanfrein 3 étant constituées par des cordons de soudure empilés l'un sur l'autre dans la direction verticale.

La surface d'extrémité 2a de la pièce 2 présente une section transversale constituée par deux portions de droite disposées l'une à la suite de l'autre dans la direction de la hauteur du chanfrein (direction de l'axe horizontal X), la première portion de droite faisant un angle de 30° avec l'axe X du chanfrein et la seconde portion de droite un angle de 25°.

La surface d'extrémité 1a de la pièce 1 présente la forme d'une droite inclinée de 5° par rapport à l'axe X, dans un sens opposé aux portions de droite de la section de la surface 1a. De cette manière, le chanfrein 3 est évasé de l'intérieur vers l'extérieur des pièces. Les couches de métal déposées depuis l'intérieur vers l'extérieur des pièces 1 et 2 présentent des largeurs croissantes, dans la direction transversale Y du chanfrein 3.

Sur la figure 2A, on a représenté les pièces 1 et 2 ayant des surfaces d'extrémité 1a et 2a délimitant le chanfrein 3 dont on a réalisé le remplissage par dépôt de couches successives de métal d'apport 5a, 5b, 5c, 5d et 5e.

Les couches 5a, 5b, 5c, 5d et 5e ont été réalisées sans qu'on ait prévu un réglage des paramètres de soudage pour obtenir des couches d'épaisseur constante. La variation d'épaisseur des couches se produisant toujours dans le même sens (épaisseur de la couche plus importante dans la partie inférieure du chanfrein), la surface externe des couches est de plus en plus inclinée par rapport à la direction transversale du chanfrein. Lorsque le métal d'apport atteint l'extrémité externe de la surface 1a de la pièce 1, le chanfrein n'est pas totalement rempli et la couche externe du métal d'apport ne recouvre que partiellement la surface d'extrémité 2a de la pièce 2.

Il peut en résulter un défaut du joint de soudure auquel il est difficile de remédier.

Sur la figure 2B, on a représenté des couches de remplissage 6a, 6b et 6c du chanfrein 3 entre les pièces 1 et 2 réalisées par un procédé de soudage avec réglage des paramètres de soudage, de manière que les couches 6a, 6b et 6c déposées successivement dans le chanfrein 3 présentent une épaisseur parfaitement constante sur toute la largeur du chanfrein 3 dans la direction transversale. Les couches 6a, 6b, 6c sont délimitées par des surfaces sensiblement planes et parallèles entre elles.

Un tel réglage des paramètres de soudage qui peut être réalisé par le procédé de l'invention permet de réaliser un remplissage complet et régulier du chanfrein 3, de telle sorte que le joint de soudure ne présente aucun défaut de remplissage après réalisation de la dernière couche de métal d'apport au voisinage de la surface extérieure des pièces 1 et 2.

On va maintenant décrire un procédé de soudage suivant l'invention permettant de réaliser le remplissage d'un chanfrein entre deux pièces en acier faiblement allié par des couches superposées d'épaisseur parfaitement constante ayant des surfaces planes et parallèles.

Le procédé de soudage suivant l'invention met en oeuvre une tête de soudage MIG/MAG dont on réalise le déplacement par rapport aux pièces à souder, dans une direction longitudinale d'un chanfrein de soudure entre les pièces. Cette direction longitudinale peut être par exemple une direction circonférentielle d'un chanfrein de soudage annulaire entre deux pièces annulaires placées bout à bout.

Le soudage est un soudage en corniche, les cordons de soudure étant déposés dans le chanfrein dans une direction horizontale et empilés l'un sur l'autre dans la direction verticale pour constituer une couche de remplissage.

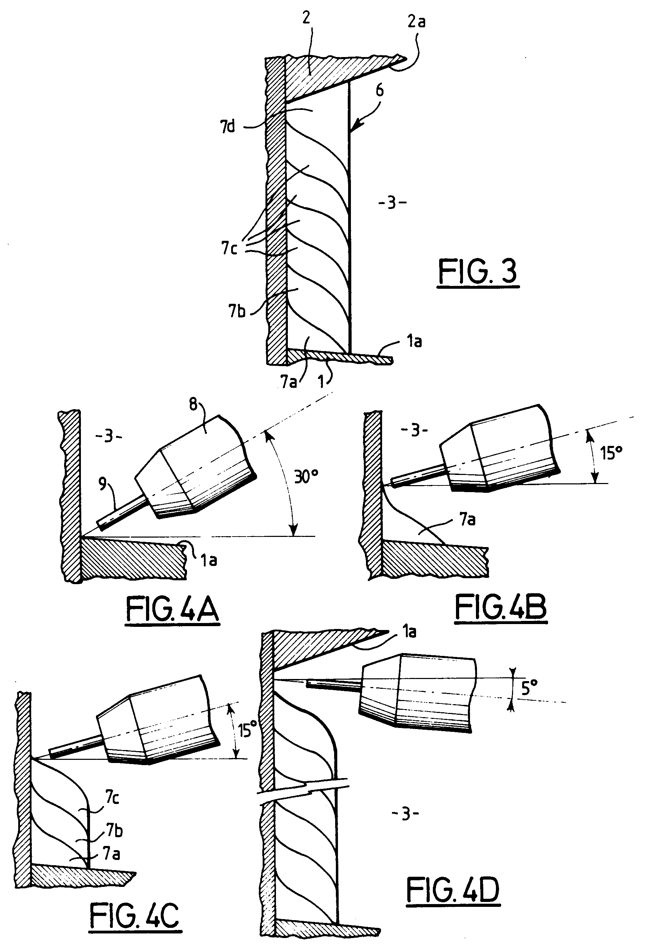

Sur la figure 3, on a représenté une couche de remplissage 6 du chanfrein 3, en métal d'apport qui est constituée par des cordons de soudure 7a, 7b, 7c, 7d empilés l'un sur l'autre dans la direction verticale correspondant à la direction transversale du chanfrein 3, entre un premier bord du chanfrein 3 constitué par la surface d'extrémité 1a de la pièce inférieure 1 et un second bord du chanfrein constitué par la surface d'extrémité 2a de la pièce supérieure 2.

Pour constituer les différentes passes successives des couches de remplissage du chanfrein, la tête de soudage sous gaz inerte MIG/MAG est déplacée dans la direction longitudinale du chanfrein 3, par rapport aux pièces 1 et 2, c'est-à-dire dans une direction perpendiculaire au plan de la figure 3.

Le dépôt des cordons de soudure est réalisé en imposant des conditions de soudage communes à toutes les passes.

Les conditions sont les suivantes :

- préchauffage des pièces à 150°C,
- maintien des pièces entre deux passes successives à 150 à 250°C,
- post-chauffage des pièces de 300 à 350°C, pendant 3 heures à 3 heures et demi,
- métal d'apport, fil plein métallique de 1,2 mm de diamètre,
- gaz de protection à un débit de 18 l/mn,
- taux de dépôt du métal d'apport : 3 à 4 kg/h au minimum,
- mode de soudage par courants pulsés.

On utilise un robot de soudage comportant un chariot motorisé, le chariot et la tête de soudage étant commandés à partir d'une armoire de commande.

Le réglage de l'opération de soudage et en particulier le réglage des paramètres de soudage tel qu'il sera décrit plus loin est réalisé grâce à un micro-ordinateur.

Le générateur fournissant le courant de soudage à la tête de soudage fonctionne en mode pulsé synergique débrayé. Dans ce mode de fonctionnement, une première consigne permet de fixer la vitesse de défilement du fil de métal d'apport et une deuxième consigne permet d'ajuster le mode de transfert en fixant la fréquence de pulsation du courant. Ce mode de fonctionnement présente l'avantage de permettre d'ajuster directement la vitesse du fil de métal d'apport indépendamment de tout paramètre.

Le procédé suivant l'invention permet d'obtenir un remplissage par le métal d'apport sous forme de couches plates et parallèles, comme représenté de manière schématique sur la figure 2B. On évite ainsi la présence de toute surépaisseur ou de tout manque d'épaisseur à un endroit particulier des couches en métal d'apport et donc de créer des défauts lors du remplissage du chanfrein, par amplification du phénomène, lors de l'empilement des couches.

Pour obtenir une couche plate et régulière, il est nécessaire que les cordons constituant la couche aient tous une épaisseur identique.

L'épaisseur des cordons de soudure déposés au cours d'une passe dépend des paramètres suivants :

-   les paramètres opératoires du soudage (vitesse du fil d'apport, intensité et tension du courant, vitesse d'avance de la tête de soudage, distance entre la tête de soudage et les pièces à souder);
-   la forme de la surface de raccordement sur laquelle se dépose le cordon,
-   le décalage du point d'impact de l'arc par rapport au point d'impact de la passe précédente.

En ce qui concerne les paramètres de soudage, il suffit de déterminer pour chacune des passes de soudage la vitesse d'avance du soudage dans la direction longitudinale du chanfrein, les autres paramètres dépendant de la vitesse d'avance ou pouvant être définis a priori pour chacune des passes.

Le procédé de réglage suivant l'invention permet de déterminer, comme il sera expliqué plus loin, la vitesse d'avance et le décalage d'une passe à la suivante, pour l'ensemble des cordons constituant une couche.

Comme il est visible sur la figure 3, dans une couche 6 de métal déposée, on peut distinguer quatre types de cordons de soudure différents ayant des sections de formes différentes entre elles.

Le cordon de soudure 7a est déposé au cours de la première passe dans la partie inférieure du chanfrein 3.

Le cordon de soudure 7b est déposé au cours d'une seconde passe, la surface de raccordement du cordon de soudure 7b étant constituée par la surface supérieure du cordon 7a.

Les cordons 7c qui sont tout identiques et qui constituent les cordons réalisés au cours des passes allant de la troisième jusqu'à l'avant-dernière passe, ces passes successives désignées comme passes courantes de constitution de la couche présentent tous des surfaces de raccordement identiques à la surface de raccordement supérieure de la deuxième couche 7b.

Il est donc possible de prévoir des paramètres de soudage pour réaliser une première passe permettant d'obtenir le cordon 7a, une seconde passe permettant d'obtenir le cordon 7b et une pluralité de passes courantes pour obtenir des cordons de soudure 7c tous analogues.

Cependant, si les paramètres de soudage des passes de dépôt des cordons 7a, 7b et 7c sont maintenus d'une couche à l'autre, la section restant à remplir au cours de la passe finale de réalisation du cordon 7d varie d'une couche à l'autre, du fait que la largeur du chanfrein dans la direction transversale et donc la longueur des couches à réaliser varie suivant sa position à l'intérieur du chanfrein.

Dans le cas de variations notables du volume restant à remplir au cours de la passe finale, la réalisation du cordon de soudure au cours de cette passe finale peut se traduire par des défauts de remplissage du chanfrein.

Pour éviter ces défauts, le procédé suivant l'invention permet de faire varier les paramètres des passes d'une couche à la suivante, afin de réaliser la passe finale dans des conditions optimales.

On a tout d'abord déterminé les paramètres initiaux optimaux de soudage pour chacun des types de passe (première passe, deuxième passe, passe courante ou passe finale).

On a déterminé la position idéale de la torche de soudage au cours de chacune des passes et en particulier l'angle de la torche et du fil électrode avec l'axe du chanfrein ainsi que la position du point d'impact de l'arc pour chacune des passes.

Sur la figure 4A, on a représenté la torche 8 et le fil électrode 9 au cours de la première passe. Le fil électrode et l'axe de la torche font un angle de 30° avec l'axe du chanfrein 3 ; le point d'impact se situe au point le plus bas du chanfrein 3, c'est-à-dire sur la surface de raccordement inférieure la.

Après avoir réalisé la première passe 7a, comme il est visible sur la figure 4B, on réalise la deuxième passe avec un angle de la torche de soudage de 15° avec l'axe du chanfrein 3. Le point d'impact de l'arc se situe au niveau du raccordement avec la première passe 7a.

De même, comme il est visible sur la figure 4C, pour réaliser les cordons 7c, lors des passes courantes successives, on utilise un angle de torche de 15°, le point d'impact de l'arc se situant au niveau du raccordement du cordon de soudure immédiatement inférieur.

Enfin, comme il est visible sur la figure 4D, pour réaliser la passe finale, on utilise un angle de torche de -5° par rapport à l'axe du chanfrein 3, le point d'impact de l'arc se trouvant à mi-distance entre le point de raccordement de l'avant-dernière couche et le bord supérieur 2a du chanfrein 3.

On a déterminé, pour l'ensemble des passes, une même valeur de la distance entre l'électrode et la pièce et une vitesse d'avance du fil de soudure.

Des essais permettent de déterminer les valeurs initiales optimales de la vitesse d'avance de la tête de soudage dans la direction longitudinale et du décalage dans la direction transversale du chanfrein de la tête de soudage d'une passe à la suivante.

On détermine également par des essais la valeur optimale de la tension et de l'intensité du courant de soudage au cours de chacun des types de passe.

Le procédé de réglage suivant l'invention permet de déterminer, à partir de valeurs initiales qui sont relatives à la couche sur laquelle on réalise le dépôt d'une nouvelle couche, les valeurs de la vitesse d'avance de la tête de soudage et du décalage dans la direction transversale du chanfrein, entre deux passes relatives aux passes de réalisation de la nouvelle couche.

Le procédé suivant l'invention permet également de réaliser la passe finale de chacune des couches dans des conditions standard assurant un remplissage parfait du chanfrein et la réalisation d'un cordon de soudure de très bonne qualité au cours de la passe finale.

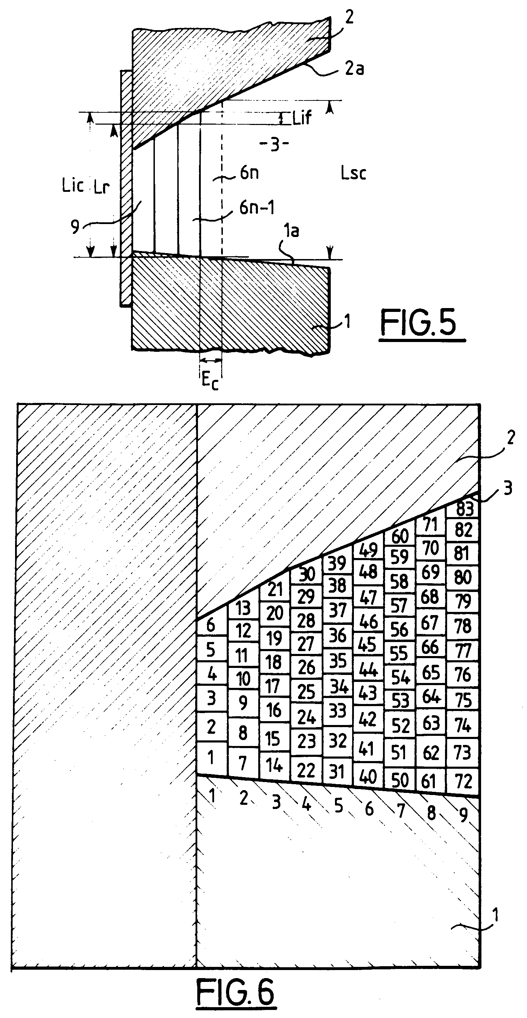

Sur la figure 5, on a représenté deux pièces 1 et 2 entre lesquelles est ménagé un chanfrein de soudage 3 dont on a réalisé le remplissage partiel par du métal d'apport 9 déposé sous forme de couches planes parallèles successives, depuis la partie interne des pièces 1 et 2.

On va maintenant montrer de quelle manière le procédé suivant l'invention permet de déterminer les paramètres de soudage variables d'une couche à la suivante, pour réaliser le dépôt d'une énième couche $6_n$ sur la surface supérieure du métal déposé 9, c'est-à-dire sur la n moins unième couche déposée dans le chanfrein.

Du fait que les conditions initiales de soudage sont déterminées par des essais et que les conditions de réalisation des passes de chacune des couches successives peuvent être déterminées par le procédé de l'invention, comme il sera expliqué par la suite, au moment de réaliser la couche $6_n$, on dispose des données relatives à la couche inférieure $6_{n-1}$, ces données étant enregistrées dans la mémoire du micro-ordinateur de gestion du procédé de soudage.

Les paramètres variables d'une couche à la suivante, comme il a été expliqué plus haut, sont relatifs au décalage entre passes successives d'une même couche et à la vitesse d'avance longitudinale de la tête de soudage pour la réalisation des passes.

La couche $6_n$ est tout d'abord caractérisée par sa largeur inférieure $L_{ic}$ qui correspond à la largeur supérieure de la couche $6_{n-1}$. Cette largeur supérieure de la couche $6_{n-1}$ a été déterminée précédemment et mise en mémoire du micro-ordinateur. Pour la première couche réalisée au fond du chanfrein 3, cette largeur inférieure correspond à la largeur minimale du chanfrein.

La largeur $L_{ic}$ d'une couche $6_n$ peut être également déterminée à partir de la position de la couche suivant la hauteur du chanfrein et d'une relation entre la hauteur et la largeur du chanfrein dans la direction transversale.

On détermine, à partir de la largeur $L_{ic}$ un nombre entier $N_p$ correspondant au nombre de passes juxtaposées permettant d'obtenir une longueur de couche, suivant la direction transversale du chanfrein, la plus proche possible de $L_{ic}$. Le nombre de passes $N_p$ est obtenu en prenant pour largeur unitaire des passes, les largeurs des cordons initiaux.

En outre, le procédé de réglage suivant l'invention est réalisé de manière que la dernière passe de la couche soit réalisée dans des conditions optimales. On a défini précédemment une largeur inférieure optimale $L_{if}$ du cordon 7d réalisé au cours de la passe finale. On retranche de la largeur $L_{ic}$ la largeur $L_{if}$ pour obtenir la largeur restante $L_r$ de la couche sur laquelle seront répartis le cordon 7a réalisé lors de la première passe, le cordon 7b réalisé au cours de la seconde passe et les cordons 7c réalisés au cours des passes courantes.

On détermine d'autre part, à partir des valeurs initiales des largeurs de cordons, la largeur initiale d'une couche présentant $N_p$ cordons de soudure juxtaposés, soit $L_{in}$ cette largeur initiale restante. On détermine le rapport $R = (L_{ic} - L_{if})/L_{in}$, ce rapport R permettant d'obtenir les décalages entre passes pour la réalisation de la couche $6_n$ à partir des décalages initiaux.

On réalise le calcul de chacun des décalages en multipliant le décalage initial de la passe correspondante par le rapport R.

En outre, on a pu déterminer qu'il existe un rapport d'homothétie entre la largeur et l'épaisseur des différents cordons de soudure réalisés au cours de passes successives. Le rapport d'homothétie est égal à la valeur de R. On obtient la nouvelle épaisseur $E_c$ de la couche $6_n$, à partir de l'épaisseur initiale obtenue avec les paramètres initiaux, multipliée par le rapport R.

Du fait qu'il existe un rapport R entre les dimensions des sections des cordons de soudure des couches obtenues avec les paramètres initiaux de soudage, les sections des cordons de soudure sont dans un rapport proportionnel au carré de la valeur de R.

Il existe une relation directe entre la vitesse d'avance au cours de chacune des passes et la section du cordon de soudure réalisé au cours de la passe.

On peut donc déduire la vitesse d'avance de la tête de soudage au cours de chacune des passes de la couche $6_n$, des vitesses initiales multipliées par le rapport $R^2$.

A partir de l'épaisseur $E_c$ de la couche $6_n$, on peut connaître la section totale de la couche $6_n$ et en déduire la section du dernier cordon de soudure 7d. De la section du dernier cordon de soudure, on peut déduire la vitesse d'avance au cours de la dernière passe.

A partir de l'épaisseur $E_c$ de la couche $6_n$, on peut déterminer de manière très précise la largeur supérieure $L_{sc}$ de la couche $6_n$, en tenant compte de l'élargissement du chanfrein.

La largeur supérieure $L_{sc}$ de la couche $6_n$ constitue la largeur inférieure $L_{ic}$ de la couche $6_{n+1}$.

On peut alors réaliser la couche $6_n$ en fixant les conditions de soudage aux valeurs qui ont été calculées, puis déterminer les nouvelles conditions pour la couche suivante $6_{n+1}$.

Les données relatives aux paramètres de soudage de chacune des passes des couches à réaliser sont transmises directement au robot de soudage.

On peut ainsi réaliser de manière totalement automatique, le remplissage du chanfrein par des couches d'épaisseur constante délimitées par des surfaces de raccordement parfaitement parallèles, avec une passe finale pour chacune des couches réalisée dans des conditions standard.

Le procédé suivant l'invention permet donc une réalisation totalement automatique d'une soudure de qualité parfaite entre deux pièces de grandes dimensions.

Sur la figure 6, on a représenté les deux pièces 1 et 2 soudées entre elles par un joint de soudure réalisé par dépôt d'un métal d'apport par couches successives à l'intérieur du chanfrein 3 ménagé entre les pièces 1 et 2. Chacune des couches est elle-même constituée de passes successives qui ont été désignées par leur numéro d'ordre, lors de la réalisation du remplissage du chanfrein.

Le remplissage du chanfrein est réalisé par dépôt de neuf couches successives qui sont chacune d'épaisseur parfaitement constante, suivant la largeur dans la direction transversale du chanfrein 3 (direction verticale sur la figure 6).

La couche 1 comporte six cordons de soudure réalisés au cours de six passes successives. Les couches suivantes 2 à 9 comportent respectivement sept, huit, neuf, neuf, dix, onze, onze et douze cordons de soudure. Le remplissage du chanfrein est réalisé au cours de quatre-vingt trois passes successives de soudage.

L'invention ne se limite pas au mode de réalisation qui a été décrit.

C'est ainsi qu'on peut utiliser le procédé selon l'invention pour déterminer et régler les paramètres du soudage pour réaliser des couches successives de remplissage d'un chanfrein, dans le cas d'un soudage différent d'un soudage en corniche et par un procédé différent du procédé MIG/MAG.

Dans le cas de l'utilisation d'un procédé différent du procédé MIG/MAG, certains des paramètres du soudage pourront être définis d'une manière différente de celle qui a été décrite plus haut.

De même, avec le procédé MIG/MAG, une variante peut consister à faire varier la vitesse de fil (et les paramètres directement associés tels que la tension) pour ajuster la section de la passe.

Le procédé suivant l'invention s'applique de manière très générale au soudage de pièces métalliques de grandes dimensions, que ces pièces présentent une forme plane ou rectiligne et soient assemblées suivant une zone de soudure rectiligne ou que ces pièces présentent une forme ayant une symétrie de révolution, par exemple une forme annulaire ou tubulaire.

## Revendications

1. Procédé de réglage de paramètres de soudage pour la réalisation d'un joint de soudure entre une première et une seconde pièces métalliques (1, 2), par remplissage d'un chanfrein (3) qui s'étend suivant une première direction longitudinale des pièces (1, 2) et dans une seconde direction, transversale, entre un premier et un second bords (la, 2a) usinés respectivement sur la première et sur la seconde pièce (1, 2), par des cordons de soudure (7a, 7b, 7c, 7d) réalisés chacun au cours d'une passe de soudage par déplacement relatif d'une tête de soudage (8) à une vitesse d'avance définie, par rapport aux pièces, dans la direction longitudinale et juxtaposés dans la direction transversale entre les deux pièces (1, 2), pour constituer des couches (6, $6_n$) d'épaisseur constante qui sont empilées l'une sur l'autre dans une troisième direction perpendiculaire aux deux premières, suivant la hauteur du chanfrein (3), caractérisé par le fait que pour chacune des couches (6, $6_n$) de remplissage du chanfrein (3) :

   - on détermine une largeur de base ($L_{ic}$) de la couche ($6_n$) correspondant à la dimension dans la direction transversale d'une surface sur laquelle on dépose la couche ($6_n$), entre le premier et le second bords (la, 2a) du chanfrein (3),
   - on détermine le nombre ($N_p$) de passes nécessaires pour réaliser la couche ($6_n$) à partir d'une valeur initiale de la largeur des cordons de soudure (7a, 7b, 7c, 7d),
   - on détermine une largeur restante réelle ($L_r$) de la couche ($6_n$) en soustrayant de la largeur de base ($L_{ic}$) une valeur fixe prédéterminée ($L_{if}$) correspondant à la largeur optimale d'un cordon de soudure en contact avec le second bord (2a) de la couche ($6_n$) qui doit être déposé au cours d'une passe finale de réalisation de la couche ($6_n$),
   - on détermine une valeur initiale ($L_{in}$) de la largeur restante à partir de valeurs initiales des largeurs des cordons de soudure (7a, 7b, 7c, 7d) et du nombre de passes ($N_p$),
   - on calcule un rapport R entre la largeur restante réelle ($L_r$) et la valeur initiale ($L_{in}$) de la largeur restante, et
   - on détermine à partir d'une valeur initiale de la vitesse d'avance et du rapport R, la vitesse d'avance dans la direction longitudinale de la tête de soudage (8) au cours des passes successives pour la réalisation de la couche ($6_n$), la vitesse d'avance de la tête de soudage au cours de la passe finale, dans la direction longitudinale, et, à partir d'une valeur initiale du décalage et du rapport R, un décalage de la tête de soudage (8) dans la direction transversale du chanfrein (3) entre deux passes successives.

2. Procédé suivant la revendication 1, caractérisé par le fait que les valeurs initiales de la largeur des cordons de soudure (7a, 7b, 7c, 7d) et du décalage dans la direction transversale de la tête de soudage (8) entre deux passes successives sont des valeurs mémorisées correspondant à des paramètres initiaux optimaux de soudage.

3. Procédé suivant l'une quelconque des revendications 1 et 2, caractérisé par le fait qu'on détermine l'épaisseur ($E_c$) de la couche ($6_n$) à partir de l'épaisseur d'une couche obtenue avec des paramètres initiaux optimaux de soudage et du rapport R.

4. Procédé suivant l'une quelconque des revendications 1 à 3, caractérisé par le fait que la première pièce (1) est disposée en dessous de la seconde pièce (2) de manière que le premier bord (la) du chanfrein (3) soit disposé en dessous et en vis-à-vis du second bord (2a), le dépôt de chacun des cordons de soudure (7a, 7b, 7c, 7d) d'une couche (6) disposée dans une direction verticale étant réalisé sur une surface de raccordement supérieur d'un cordon précédent ou sur la surface inférieure (2a) du chanfrein (3) et la dernière passe permettant le dépôt d'un cordon de soudure (7d) étant réalisé entre la surface supérieure de raccordement d'un cordon de soudure (7c) et le bord supérieur (2a) du chanfrein (3).

5. Procédé suivant la revendication 4, caractérisé par le fait que, pour chacune des couches (6) à disposition verticale, on dépose un premier cordon de soudure (7a) sur le bord inférieur (2a) du chanfrein (3), puis un second cordon de soudure (7b) sur une surface de raccordement supérieure du premier cordon de soudure (7a), puis successivement, des cordons de soudure courants (7c) ayant des sections identiques, d'abord sur une surface de raccordement supérieure du second cordon de soudure (7b), puis l'un sur l'autre, le premier cordon de soudure (7a) et le second cordon de soudure (7b) ayant des sections transversales de formes différentes l'une de l'autre et différentes de la forme des sections des cordons de soudure courants (7c).

6. Procédé suivant la revendication 5, caractérisé par le fait que l'inclinaison de la tête de soudage (8) par rapport à un axe horizontal (X) de la section transversale du chanfrein (3) présente une première valeur angulaire pendant la première passe, une seconde valeur angulaire pendant la seconde passe et les passes suivantes et une troisième valeur angulaire pendant la passe finale.

7. Procédé suivant la revendication 6, caractérisé par le fait que la tête de soudage (8) est une tête de soudage par arc électrique et que le point d'impact de l'arc de la tête de soudage (8) se trouve sur le bord inférieur (2a) du chanfrein (3), pendant la première passe de soudage pour la réalisation d'un premier cordon de soudure (7a), en un point de raccordement du cordon de soudure de la passe précédente pour la deuxième passe de réalisation d'un second cordon de soudure (7b) de la couche (6) et pour les passes courantes de réalisation de cordons de soudure identiques (7c) et en un point équidistant d'un point de raccordement du cordon de soudure réalisé au cours de l'avant-dernière passe et le bord supérieur (2a) du chanfrein (3), au cours de la passe finale de réalisation d'un cordon de soudure (7d).

8. Procédé suivant l'une quelconque des revendications 1 à 7, caractérisé par le fait que la tête de soudage (8) est une tête de soudage sous gaz MIG/MAG comportant une électrode de soudage constituée par un fil en métal d'apport (9).

9. Procédé suivant l'une quelconque des revendications 1 à 8, caractérisé par le fait que les pièces (1, 2) sont des pièces annulaires dont on effectue le raccordement bout à bout par soudage en corniche.

**Claims**

1. Method of regulating the welding parameters in order to produce a weld joint between a first and a second metal part (1,2) by filling a chamfer (3) which extends in a first longitudinal direction of the parts (1,2) and in a second, transverse direction, between a first and a second edge (1a,2a), machined respectively on the first and on the second part (1,2), by weld beads (7a,7b,7c,7d) each produced during a welding pass by relative displacement of a welding head (8) at a specific feed speed, relative to the parts, in the longitudinal direction and juxtaposed in the transverse direction between the two parts (1,2) in order to form layers ($6,6_n$) of constant thickness which are stacked one on the other in a third direction perpendicular to the two first directions, according to the height of the chamfer (3), characterised by the fact that for each of the layers ($6,6_n$) for filling the chamfer (3):

   - there is determined a base width ($L_{ic}$) of the

layer ($6_n$) corresponding to the dimension in the transverse direction of a surface on which the layer ($6_n$) is deposited, between the first and the second edges (1a,2a) of the chamfer (3),

- the number ($N_p$) of passes necessary to produce the layer ($6_n$) is determined from an initial value of the width of the weld beads (7a,7b,7c,7d),

- a residual real width ($L_r$) of the layer ($6_n$) is determined by subtracting from the base width ($L_{ic}$) a predetermined fixed value ($L_{if}$) corresponding to the optimum width of a weld bead in contact with the second edge (2a) of the layer ($6_n$) which must be deposited during a final pass for producing the layer ($6_n$),

- an initial value ($L_{in}$) of the residual width is determined from initial values of the widths of the weld beads (7a,7b,7c,7d) and the number of passes ($N_p$),

- a ratio (R) between the real residual value ($L_R$) and the initial value ($L_{in}$) of the residual value is calculated,

- there is determined, from an initial value of the feed speed and of the ratio (R), the feed speed in the longitudinal direction of the welding head (8), during successive passes for producing the layer ($6_n$), the feed speed of the welding head during the final pass, in the longitudinal direction, and, from an initial value of the shift and of the ratio (R), a shift of the welding head (8) in the transverse direction of the chamfer (3) between two successive passes.

2. Method according to claim 1, characterised in that the initial values of the width of the weld beads (7a,7b,7c,7d) and of the shift in the transverse direction of the welding head (8) between two successive passes are values stored in memory corresponding to initial optimum welding parameters.

3. Method according to any one of claims 1 and 2, characterised in that the thickness ($E_c$) of the layer ($6_n$) is determined from the thickness of a layer obtained with initial optimum welding parameters and the ratio (R).

4. Method according to any one of claims 1 to 3, characterised in that the first part (1) is disposed underneath the second part (2) such that the first edge (1a) of the chamfer (3) is disposed underneath and facing the second edge (2a), deposition of each of the welding beads (7a,7b,7c,7d) of a layer (6) disposed in a vertical direction being produced on an upper connecting surface of a preceding bead or on the lower surface (2a) of the chamfer (3), and the last pass permitting deposition of a weld bead (7d) being produced between the upper connecting surface of a weld bead (7c) and the upper edge (2a) of the chamfer (3).

5. Method according to claim 4, characterised in that, for each of the vertically-disposed layers (6), there is deposited a first weld bead (7a) on the lower edge (2a) of the chamfer (3), then a second weld bead (7b) on an upper connecting surface of the first weld bead (7a), then successive running weld beads (7c) having identical sections, firstly on an upper connecting surface of the second weld bead (7b), then one upon the other, the first weld bead (7a) and the second weld bead (7b) having transverse sections of shapes different from one another and different from the shape of the sections of the running weld beads (7c).

6. Method according to claim 5, characterised in that the inclination of the welding head (8) with respect to a horizontal axis (X) of the transverse section of the chamfer (3) has a first angular value during the first pass, a second angular value during the second pass and the subsequent passes, and a third angular value during the final pass.

7. Method according to claim 6, characterised in that the welding head (8) is an electric arc welding head and in that the point of impact of the arc of the welding head (8) is located on the lower edge (2a) of the chamfer (3), during the first welding path in order to produce a first weld bead (7a), at a connecting point of the weld bead of the preceding pass for the second pass producing a second weld bead (7b) of the layer (6), and for the running passes for producing identical weld beads (7c) at a point equidistant from a point connecting the weld bead produced during the penultimate pass and the upper edge (2a) of the chamfer (3), during the final pass for producing a weld bead (7d).

8. Method according to any one of claims 1 to 7, characterised in that the welding head (8) is a gas MIG/MAG gas welding head comprising a welding electrode made up of a filler metal wire (9).

9. Method according to any one of claims 1 to 8, characterised in that the parts (1,2) are annular parts which are connected end to end by cornice welding

**Patentansprüche**

1. Verfahren zur Regelung von Schweißparametern zur Herstellung einer Schweißnaht zwischen einem ersten und einem zweiten metallischen Werkstück (1, 2) durch Füllen einer Fuge (3), die sich in einer ersten Längsrichtung der Werkstücke (1, 2) und in einer zweiten Querrichtung zwischen einer ersten Flanke (1a) und einer zweiten Flanke (2a) erstreckt, die am ersten bzw. am zweiten Werkstück (1, 2) ausgearbeitet sind, mit Schweißraupen (7a, 7b, 7c, 7d), die jeweils während eines Schweißdurchgangs durch Relativbewegung eines Schweißkopfs (8) bezüglich der Werkstücke mit einer bestimmten Vorschubgeschwindigkeit in Längsrichtung gebildet werden und in Querrichtung zwischen den beiden Werkstücken (1, 2) nebeneinandergesetzt werden, um Schichten (6, $6_n$) konstanter Dicke zu bilden, die in einer dritten, zu den beiden ersten Richtungen senkrechten Richtung in der Höhe der Fuge (3) übereinandergestapelt werden, dadurch gekennzeichnet, daß man für jede der Schichten (6, $6_n$) zum Füllen der Fuge (3)

- eine Basisbreite ($L_{ic}$) der Schicht ($6_n$) bestimmt, die der Querabmessung einer Fläche, auf der die Schicht ($6_n$) aufgetragen wird, zwischen der ersten und der zweiten Flanke (1a, 2a) der Fuge (3) entspricht,
- die Anzahl ($N_p$) von Durchgängen, die zur Herstellung der Schicht ($6_n$) erforderlich sind, aus einem Anfangswert der Breite der Schweißraupen (7a, 7b, 7c, 7d) bestimmt,
- eine tatsächliche Restbreite ($L_r$) der Schicht ($6_n$) bestimmt, indem von der Basisbreite ($L_{ic}$) ein vorbestimmter fester Wert ($L_{if}$) abgezogen wird, der der optimalen Breite einer mit der zweiten Flanke (2a) in Kontakt befindlichen Schweißraupe der Schicht ($6_n$) entspricht, die während eines Enddurchgangs für die Herstellung der Schicht ($6_n$) aufgetragen wird,
- einen Anfangswert ($L_{in}$) der Restbreite aus Anfangswerten der Breiten der Schweißraupen (7a, 7b, 7c, 7d) und aus der Anzahl ($N_p$) der Durchgänge bestimmt,
- das Verhältnis R zwischen der tatsächlichen Restbreite ($L_r$) und dem Anfangswert ($L_{in}$) der Restbreite errechnet und
- aus einem Anfangswert der Vorschubgeschwindigkeit und aus dem Verhältnis R die Vorschubgeschwindigkeit des Schweißkopfs (8) in Längsrichtung während der aufeinanderfolgenden Durchgänge zur Herstellung der Schicht ($6_n$) und die Vorschubgeschwindigkeit des Schweißkopfs in Längsrichtung während des Enddurchgangs bestimmt und aus einem Anfangswert der Versetzung und dem Verhältnis R eine Versetzung des Schweißkopfs (8) in der Querrichtung der Fuge (3) zwischen zwei aufeinanderfolgenden Durchgängen bestimmt.

2. Verfahren nach Anspruch 1, dadurch gekennzeichnet, daß die Anfangswerte der Breite der Schweißraupen (7a, 7b, 7c, 7d) und der Versetzung des Schweißkopfs (8) in Querrichtung zwischen zwei aufeinanderfolgenden Durchgängen gespeicherte Werte sind, die den optimalen Anfangsschweißparametern entsprechen.

3. Verfahren nach einem der Ansprüche 1 und 2, dadurch gekennzeichnet, daß man die Dicke ($E_c$) der Schicht ($6_n$) aus der Dicke einer Schicht, die mit optimalen Anfangsschweißparametern erhalten wurde, und aus dem Verhältnis R bestimmt.

4. Verfahren nach einem der Ansprüche 1 bis 3, dadurch gekennzeichnet, daß das erste Werkstück (1) unter dem zweiten Werkstück (2) so angeordnet ist, daß die erste Flanke (1a) der Fuge (3) unterhalb und gegenüber der zweiten Flanke (2a) angeordnet ist, wobei jede Schweißraupe (7a, 7b, 7c, 7d) einer in vertikaler Richtung angeordneten Schicht (6) auf einer oberen Verbindungsfläche einer vorhergehenden Raupe oder auf der unteren Fläche (1a) der Fuge (3) aufgetragen wird und der letzte Durchgang für den Auftrag einer Schweißraupe (7d) zwischen der oberen Verbindungsfläche einer Schweißraupe (7c) und der oberen Flanke (2a) der Fuge (3) durchgeführt wird.

5. Verfahren nach Anspruch 4, dadurch gekennzeichnet, daß man bei jeder vertikal angeordneten Schicht (6) eine erste Schweißraupe (7a) auf die untere Flanke (1a) der Fuge (3), dann eine zweite Schweißraupe (7b) auf eine obere Verbindungsfläche der ersten Schweißraupe (7a) und dann nacheinander laufende Schweißraupen (7c) mit gleichen Querschnitten zunächst auf eine obere Verbindungsfläche der zweiten Schweißraupe (7b) und dann aufeinander aufträgt, wobei die erste Schweißraupe (7a) und die zweite Schweißraupe (7b) Querschnitte mit voneinander und von der Form der Querschnitte der laufenden Schweißraupen (7c) abweichenden Formen haben.

6. Verfahren nach Anspruch 5, dadurch gekennzeichnet, daß die Neigung des Schweißkopfs (8) gegen eine horizontale Achse (X) des Querschnitts der Fuge (3) während des ersten Durchgangs einen ersten Winkelwert, während des zweiten Durchgangs und der darauffolgenden Durchgänge einen zweiten Winkelwert und während des letzten Durchgangs einen dritten Winkelwert hat.

7. Verfahren nach Anspruch 6, dadurch gekennzeichnet, daß der Schweißkopf (8) ein Lichtbogenschweißkopf ist und der Auftreffpunkt des Lichtbogens des Schweißkopfs (8) sich während des ersten Schweißdurchgangs zur Herstellung einer ersten Schweißraupe (7a) auf der unteren Flanke (1a) der Fuge (3), beim zweiten Durchgang zur Herstellung einer zweiten Schweißraupe (7b) der Schicht (6) und bei den laufenden Durchgängen zur Herstellung von gleichen Schweißraupen (7c) an einem Anschlußpunkt der Schweißraupe des vorhergehenden Durchgangs und während des Enddurchgangs zur Herstellung einer Schweißraupe (7d) an einem Punkt in der Mitte zwischen einem Anschlußpunkt der während des vorletzten Durchgangs hergestellten Schweißraupe und der oberen Flanke (2a) der Fuge (3) befindet.

8. Verfahren nach einem der Ansprüche 1 bis 7, dadurch gekennzeichnet, daß der Schweißkopf (8) ein MIG/MAG-Schweißkopf mit einer Schweißelektrode ist, die aus einem Draht (9) aus Zusatzmetall besteht.

9. Verfahren nach einem der Ansprüche 1 bis 8, dadurch gekennzeichnet, daß die Werkstücke (1, 2) ringförmige Werkstücke sind, die durch Simsschweißung miteinander stumpf verbunden werden.

FIG. 1

FIG. 2A

FIG. 2B

FIG. 3

FIG. 4A

FIG. 4B

FIG. 4C

FIG. 4D

FIG.5

FIG.6

14